# EUROPEAN PATENT SPECIFICATION

(11) **EP 1 849 650 B1**
(45) Date of publication and mention of the grant of the patent: **29.12.2010**
(21) Application number: 07007631.0
(22) Date of filing: 13.04.2007
(51) Int. Cl.: B60N 2/36

(54) **Rear baggage compartment structure**
Heckkofferraumaufbau
Structure de compartiment de bagages arrière

(30) Priority: 28.04.2006 JP 2006124647; 28.04.2006 JP 2006124648; 28.04.2006 JP 2006124649
(43) Date of publication of application: 31.10.2007
(73) Proprietor: Mazda Motor Corporation, Aki-gun, Hiroshima 730-8670 (JP)
(72) Inventor: Sumida, Kazue c/o Mazda Motor Corporation, Hiroshima 730-8670 (JP); Toyota, Minoru c/o Mazda Motor Corporation, Hiroshima 730-8670 (JP); Ito, Akira c/o Mazda Motor Corporation, Hiroshima 730-8670 (JP)
(74) Representative: Müller-Boré & Partner Patentanwälte

(56) References cited:
- EP-A- 1 632 391
- EP-A1- 0 927 663
- DE-A1- 19 944 622
- DE-U1- 20 107 762
- US-A- 5 383 699
- US-A- 5 716 091

## Description

The present invention relates to a rear baggage compartment structure of a vehicle, in which a seat with a seat cushion and a seat back is provided on a floor panel of a vehicle body, and a baggage compartment is formed behind the seat.

Conventionally, a seat (rear seat) structure, in which a seat cushion is configured to be independent from a seat back and to move forward via a pair of links, and the seat back is supported via a reclining pivotal axis so as to be substantially horizontally folded on a sitting face of the seat cushion that has moved forward, whereby a passenger compartment and a rear baggage compartment behind the rear seat can be made continuous and thereby a baggage space can be properly enlarged, is known (see Japanese Patent Laid-Open Publication No. 2004-359158). The structure disclosed in this patent publication, however, does not disclose a baggage-compartment board that may allow any baggage to be placed thereon.

Herein, it may be required to form a flat baggage compartment when the seat back is folded on the seat cushion of the rear seat. However, since there generally exists a difference in level between the upper face of the seat back that has been folded on the seat cushion and a baggage-compartment floor, it has been difficult to improve usage of the baggage compartment.

Document DE 199 44 622 discloses a vehicle, wherein the baggage compartment of the vehicle is provided with a movable floor, which is fixedly coupled to a rotatable seat back.

The present invention has been devised in view of the above-described matter, and an object of the present invention is to provide a rear baggage compartment structure of a vehicle that improves operability at a baggage loading.

The object is solved by the rear baggage compartment structure of a vehicle according to the present invention of claim 1. Preferred embodiments of the present invention are subject of the dependent claims.

Thus, there is provided a rear baggage compartment structure of a vehicle that can move a seat back to be folded on the seat cushion as a baggage-compartment board moves upward and diminish a difference in level between a back face of the folded seat back and a baggage-compartment floor, thereby improving operability at a baggage loading.

According to the present invention, there is provided a joining method, in which a rear baggage compartment structure of a vehicle, comprising at least one seat provided on a floor panel of a vehicle body, the seat including a seat cushion and a seat back, the seat being configured to be foldable in such a manner that the seat back is folded towards or substantially on the seat cushion, a baggage compartment formed behind the seat, a baggage-compartment board provided in the baggage compartment, the board being supported so as to move at least substantially vertically, and a linkage mechanism to link an operation of the seat back of the seat to be folded substantially on the seat cushion and a movement of the baggage-compartment board. Particularly, the linkage mechanism operates the seat back of the seat to be folded on the seat cushion as the baggage-compartment board moves substantially upward.

The above-described seat may be a rear seat, and the above-described floor panel on which the seat is placed may be a kick-up floor portion. It is preferable that the above-described baggage-compartment board be a board that has a certain rigidity enough to allow a baggage to be placed thereon. According to the above-described structure, the seat back can be folded towards or substantially on the seat cushion as the baggage-compartment board is operated preferably moves substantially upward, and the difference in level between the back face of the folded seat back and the baggage-compartment floor can be diminished or substantially leveled out. Thereby, the operability at the baggage loading (unloading) can be improved.

According to an embodiment of the present invention, a back face of the seat back in a folded state and an upper face of the baggage-compartment board that has moved upward form a substantially continuous baggage-compartment face. Thereby, both diminishing the difference in level and usage improvement of the baggage compartment can be attained by forming the substantially continuous baggage-compartment face.

According to the present invention, the linkage mechanism comprises a control mechanism to select a linkage of movements of the seat back and the baggage-compartment board or a non-linkage thereof. Thereby, in particular, the baggage-compartment board can be moved substantially vertically independently from the seat back by selecting the above-described non-linkage of movements.

According to the present invention, the control mechanism is operated by an operation of a passenger. Thereby, selection of the linkage or the non-linkage of movements can be attained by the passenger at need.

According to another embodiment of the present invention, the control mechanism is configured such that the baggage-compartment board does not move as the seat back is moved or operated to be folded towards or substantially on the seat cushion. Thereby, the seat back can be folded or operated independently.

According to another embodiment of the present invention, the control mechanism is configured such that when the seat back is operated to a use or seating state thereof after the seat back has been folded or inclined towards or substantially on the seat cushion, the non-linkage of movements of the baggage-compartment board and the seat back is selected. Thereby, the seat back can be moved from its folded state (laying or inclined position) to its use state (upright or seating position), keeping the baggage-compartment board at its position (e.g. moved substantially upward). Thus, a return movement of the seat back to its used state can be attained while the baggage is placed on the baggage-compartment board moved upward.

According to another embodiment of the present invention, the linkage mechanism comprises an operational portion that is provided so as to be operative from a side of the baggage-compartment board to select a linkage of movements of the seat back and the baggage-compartment board or a non-linkage thereof. Thereby, the selection of linkage or non-linkage of movements can be attained by using the operation portion located on the side of the baggage-compartment board at the operation (particularly substantially upward/downward movement) of the baggage-compartment board, so the operability can be improved.

According to another embodiment of the present invention, the linkage mechanism comprises a control mechanism that limits a linkage of movement of the baggage-compartment board with respect to movement of the seat back, allowing a linkage of movement of the seat back with respect to movement of the baggage-compartment board. Thereby, the seat back can be folded or operated independently, and there can be provided a deep and large baggage compartment with the seat back that is folded and the baggage-compartment board that is located below.

According to another embodiment of the present invention, the linkage mechanism comprises a control mechanism that limits a linkage of movement of the baggage-compartment board with respect to movement of the seat back when the seat back is operated to a use state thereof after the seat back has been folded substantially on or inclined towards the seat cushion, allowing a linkage of movement of the baggage-compartment board with respect to movement of the seat back toward a folded or inclined state. Thereby, the seat back can be returned to its use or seating state, keeping the baggage-compartment board moved upward. Namely, both passenger's sitting in the seat and baggage loading onto the baggage-compartment board can be attained.

According to another embodiment of the present invention, the linkage mechanism comprises a control mechanism that limits a linkage of movement of the baggage-compartment board with respect to movement of the seat back when the seat back is moved toward a folded or inclined state and when the seat back is operated to a use or seating state thereof after the seat back has been folded substantially on or inclined towards the seat cushion. Thereby, ensuring the linkage of movements of the baggage-compartment board and the seat back with the linkage mechanism, the seat back can be folded or inclined independently and/or returned from its folded or inclined state to its use or seating state with the control mechanism.

According to another embodiment of the present invention, the control mechanism comprises an operational portion to select a linkage state or a linkage limitation state, which is selected by an operation of a passenger. Thereby, selection of linkage or linkage limitation (non-linkage) of movements can be conducted easily with a passenger's operation of the operational portion at need, so operability at the baggage loading or passenger's additional ingress can be improved.

Other features, aspects, and advantages of the present invention will become apparent from the following description which refers to accompanying drawings.
FIG. **1** is a schematic side view of a vehicle with a rear baggage compartment structure.
FIG. **2** is a perspective view showing the rear baggage compartment structure of a vehicle.
FIG. **3** is an enlarged side view of a major portion of FIG. **2****.**
FIG. **4** is a sectional view taken along line A-A of FIG. **3****.**
FIG. **5** is a partial enlarged view of FIG. **3****,** showing a limitation mode.
FIG. **6** is an explanatory diagram showing a linkage mode.
FIG. **7** is a side view showing a linkage of an upward movement of a baggage-compartment board and a folding movement of a seat back.
FIG. **8** is a perspective view of FIG. **7****.**
FIG. **9** is a side view showing limitation of the linkage of the movement of the baggage-compartment board and the folding movement of the seat back.
FIG. **10** is a side view showing the limitation of the linkage of the movement of the baggage-compartment board at the time of returning of the seat back.
FIG. **11** is a perspective view showing another embodiment of the rear baggage compartment structure of a vehicle.
FIG. **12** is a system diagram showing the rear baggage compartment structure of a vehicle.
FIG. **13** is a perspective view showing a linkage of the folding movement of the seat back and the upward movement of the baggage-compartment board.
FIG. **14** is a perspective view showing further another embodiment of the rear baggage compartment structure of a vehicle.
FIG. **15** is an enlarged side view of a major portion of FIG. **14****.**
FIG. **16** is a sectional view taken along line B-B of FIG. **15****.**
FIG. **17** is a partial enlarged view of FIG. **15****.**
FIG. **18** is a perspective view showing a linkage of the folding movement of the seat back and the upward movement of the baggage-compartment board.
FIG. **19** is a side view showing another embodiment of a pulley disposition structure.

Hereinafter, preferred embodiments will be described referring to the accompanying drawings. It should be understood that even though embodiments are separately described, single features thereof may be combined to additional embodiments.

### EMBODIMENT 1

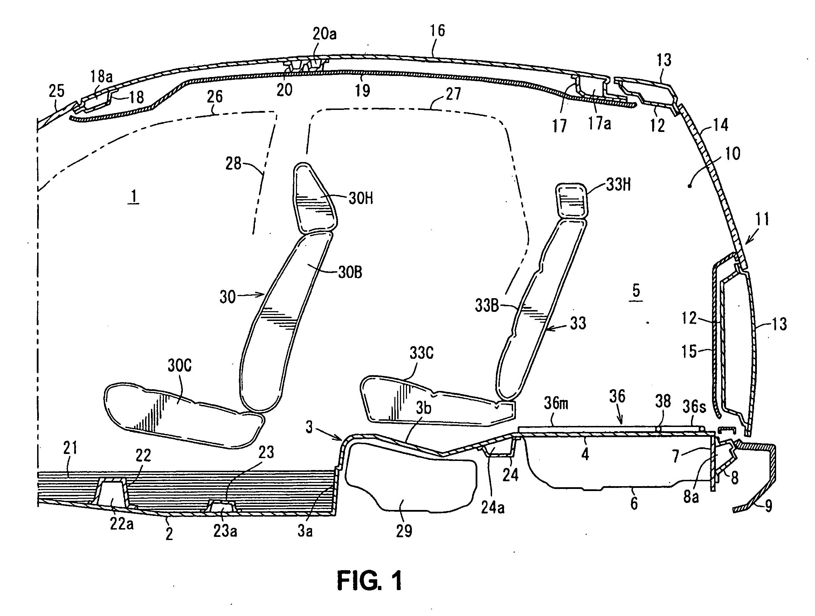

Figures show a rear baggage compartment structure of a vehicle. A vehicle body structure will be described first referring to FIG. **1****.** In FIG. **1****,** a floor panel **2** to form at least part of a floor face (bottom face) of a vehicle compartment **1** is provided, and at or near a rear portion of the floor panel **2** is provided a kick-up or inclined portion **3.**

The kick-up portion **3** comprises a connecting or substantially vertical wall portion **3a** that rises from the floor panel **2** and a kick-up floor portion **3b** that extends substantially rearward from the vertical wall portion **3a.** Behind or near the kick-up floor portion **3b** is formed a baggage-compartment floor **4** that extends rearward and horizontally. A rear baggage compartment **5** is formed above the baggage-compartment floor **4,** and a recess (preferably a concave spare tire pan **6**) is formed at a central or middle or intermediate portion of the baggage-compartment floor **4,** where one or more articles such as a spare tire is or can be at least partly stored.

Further, a rear end panel **7** that extends substantially in a vehicle width direction is (directly or indirectly) attached to a rear open end of the spare tire pan **6.** To a rear face of the rear end panel **7** is fixed a rear end member **8** that extends substantially in the vehicle width direction. Thus, a rear end (substantially closed) cross section **8a** that extends substantially in the vehicle width direction is formed between the rear end member **8** and the rear end panel **7,** thereby improving or ensuring a necessary rigidity of a rear vehicle body. A rear bumper **9** is disposed substantially behind the rear end member **8.**

At a rear of the rear baggage compartment **5** is provided a rear baggage-compartment opening **10,** which is at least partly closed and/or opened by a rear gate **11.** Thus, preferably a rear hatch back type of vehicle is provided. The rear gate **11** preferably comprises a rear gate inner panel **12,** a rear gate outer panel **13,** and a rear window **14.** A rear gate trim **15,** as an interior trim, at least partly covers a specified (predetermined or predeterminable) portion inside the vehicle that substantially faces the rear baggage compartment **5.**

Meanwhile, to a rear end portion of a roof panel **16** is (directly or indirectly) fixed a rear header **17** (vehicle body rigidity member) that extends substantially in the vehicle width direction. A header (substantially closed) cross section **17a** that extends substantially in the vehicle width direction is formed between the rear end portion of the roof panel **16** and the rear header **17,** thereby ensuring or improving a necessary rigidity of the rear vehicle body. The above-described rear gate **11** is pivotally supported via at least one hinge member (not illustrated) that preferably is provided right behind the header closed cross section **17a.**

Likewise, to a front end portion of the roof panel **16** is (directly or indirectly) fixed a front header **18** (vehicle body rigidity member) that extends substantially in the vehicle width direction. A header (substantially closed) cross section **18a** that extends substantially in the vehicle width direction is formed between the front end portion of the roof panel **16** and the front header **18,** thereby ensuring or improving a necessary rigidity of a front vehicle body. A top ceiling **19,** as an interior trim, at least partly covers the inside of the above-described front header **18,** roof panel **16** and rear header **17** as shown in FIG. **1****.**

Further, to an intermediate portion (preferably a substantially middle portion) of the roof panel **16** is (directly or indirectly) fixed a roof reinforcement **20** (vehicle body rigidity member) that extends substantially in the vehicle width direction. A (substantially closed) cross section **20a** that extends substantially in the vehicle width direction is formed between the roof reinforcement **20** and the roof panel **16,** thereby ensuring or improving a necessary rigidity of a roof portion.

Between a dash lower panel (dash panel) and the vertical wall portion **3a** of the kick-up portion **3a** on the floor panel **2** is provided a tunnel portion **21** that extends substantially in a longitudinal direction of the vehicle and projects toward the inside of the vehicle compartment **1.**

The tunnel portion **21** preferably is a member that can primarily provide a floor rigidity. One or more, preferably a plurality of floor cross members **22, 23** (vehicle body rigidity member) are provided so as to extend substantially in the vehicle width direction separately from each other between both-side wall portions of the tunnel portion **21** and side sills (specifically, side sill inners) that extend substantially in the longitudinal direction at both sides and have respective (substantially closed) cross sections. Thus, (substantially closed) cross sections **22a, 23a** that extend substantially in the vehicle width direction are respectively formed between the floor cross members **22, 23** and the floor panel **2,** thereby ensuring or improving a necessary rigidity of a lower vehicle body.

Further, a rear cross member **24** (vehicle body rigidity member) is (directly or indirectly) fixed to a lower face of a rear portion substantially behind the kick-up floor portion **3b** and a lower face of the front end portion of the baggage-compartment floor **4** (bottom face of the rear baggage compartment **5).** Thus, a (substantially closed) cross section **24a** that extends substantially in the vehicle width direction is formed between the portions **3b, 24,** thereby ensuring or improving the necessary rigidity of the lower vehicle body.

In the figures, a reference character **25** denotes a windshield, a reference character **26** denotes a front door, a reference character **27** denotes a rear door, a reference character **28** denotes a center or B-pillar as a vehicle body rigidity member, and a reference character **29** denotes a fuel tank that is disposed below the kick-up portion **3** as one of large-scaled vehicle parts.

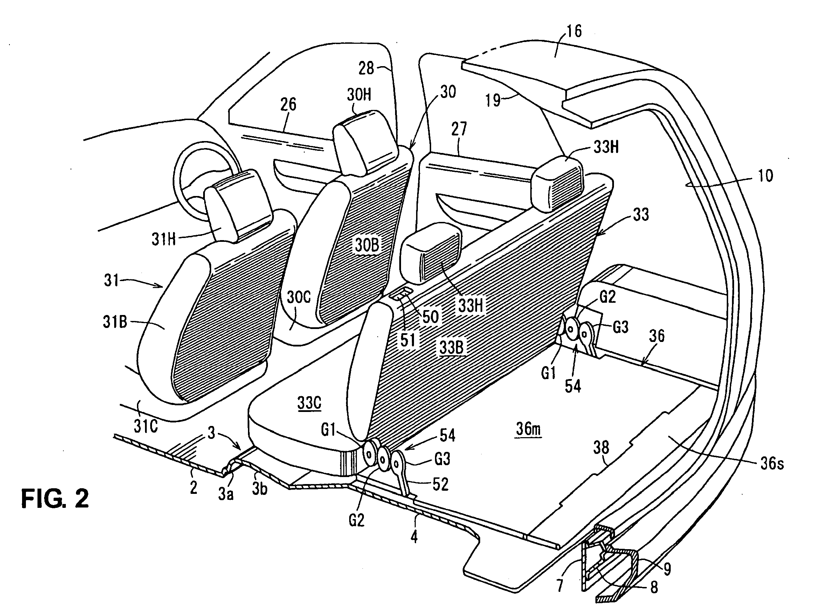

On the floor panel **2** are provided, as shown in FIGS. **1** and **2****,** a driver's seat **30H** equipped with a seat cushion **30C,** a seat back **30B** and a headrest **30H,** and a assistant's seat **31** equipped with a seat cushion **31C,** a seat back **31B** and a headrest **31H.**

Further, on the kick-up floor portion **3b** preferably is a bench-type rear seat **33** equipped with a seat cushion **33C,** a seat back **33B** and plural headrests **30H, 30H.** It should be understood, however, that the rear seat may be subdivided into two or more subseats or, instead, two or more single seats may be separately provided. The above-described rear baggage compartment **5** is formed behind this/these rear seat(s) **33.** This/these rear seat(s) **33** is configured such that its seat back **33B** is foldable substantially on its seat cushion **33C.**

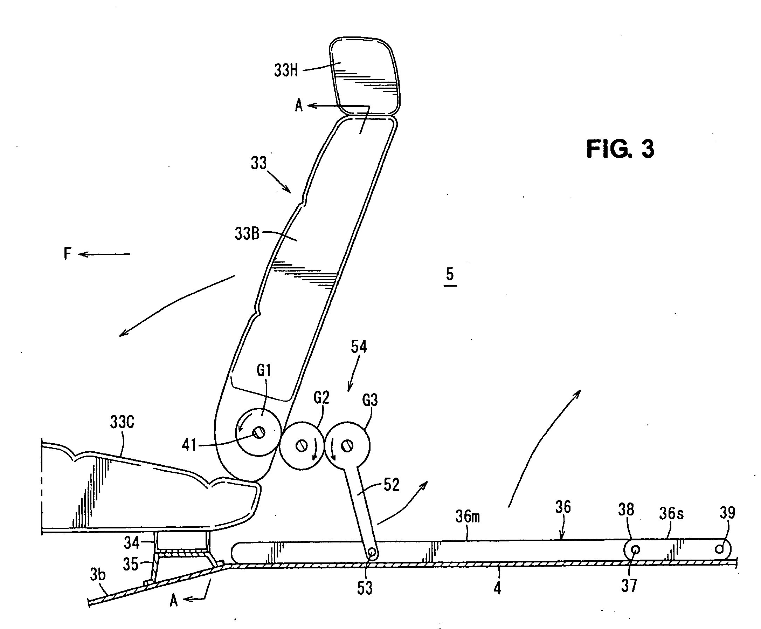

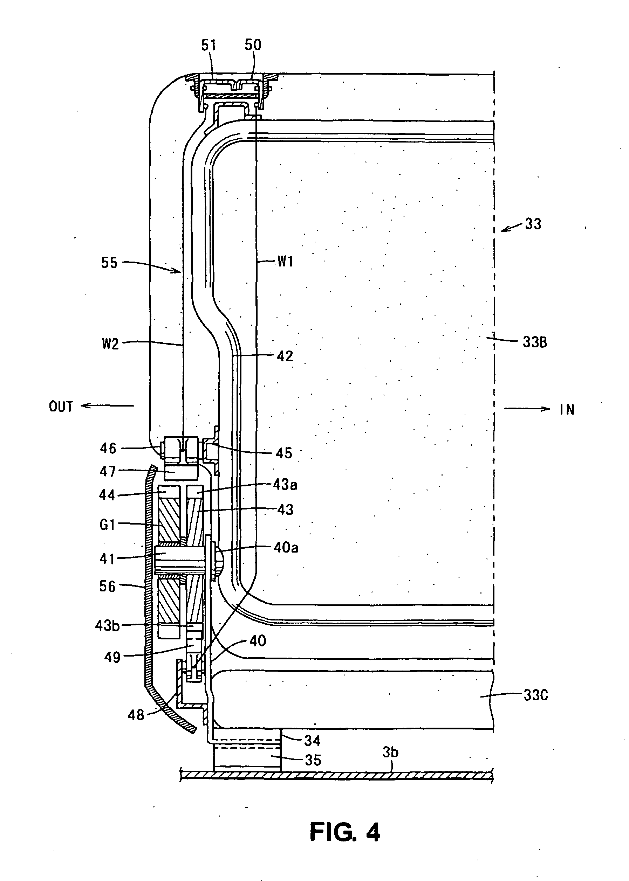

Next, the rear baggage compartment structure of a vehicle will be described in detail. FIG. **3** is an enlarged side view of a major portion of FIG. **2**. FIG **4** is a sectional view taken along line A-A of FIG. **3****.** The above-described seat cushion **33C** is supported at or near the kick-up floor portion **3b** via one or more brackets **34, 35.** Meanwhile, a baggage-compartment board **36** is provided substantially above the baggage-compartment floor **4** so as to move at least substantially vertically and allow any baggage to be placed thereon.

The above-described baggage-compartment board **36** preferably comprises a front main board **36m** and a rear sub board **36s** that preferably are split separately as shown in FIGS. **2** and **3****.** These both boards **36m, 36s** are pivotally coupled to each other via at least one hinge portion **38** including a hinge pin **37.** A pin **39,** which is provided at a base portion of the sub board **36s,** is pivotally supported at the baggage-compartment floor **4.**

There is provided, as shown in FIG. **4****,** a support plate **40** that extends substantially upward from the bracket **34** at a lower portion of the seat cushion **33C** to a side-face lower portion of the seat back **33B** along a side face of the seat cushion **33C.** A rotational axis **41** is pivotally supported at a journal portion **40a** that is provided at or near an upper portion of this support plate **40.**

The rotational axis **41** is fixed to and projects outward from a seat back frame **42.** The seat back **33B** is rotatable or pivotable around the rotational axis **41.** This rotational axis **41** is configured to rotate as the seat back **33B** rotates, and the seat back frame **42** and the seat back **33B** are configured to rotate together unitarily or integrally with this rotation of the rotational axis **41.**

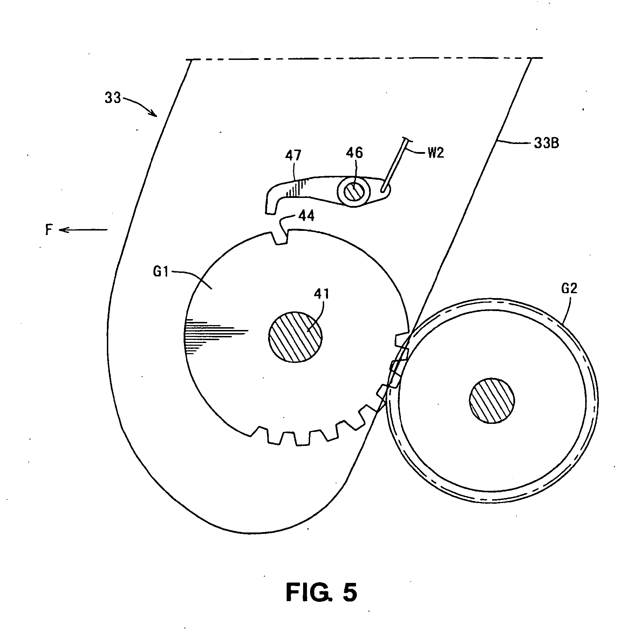

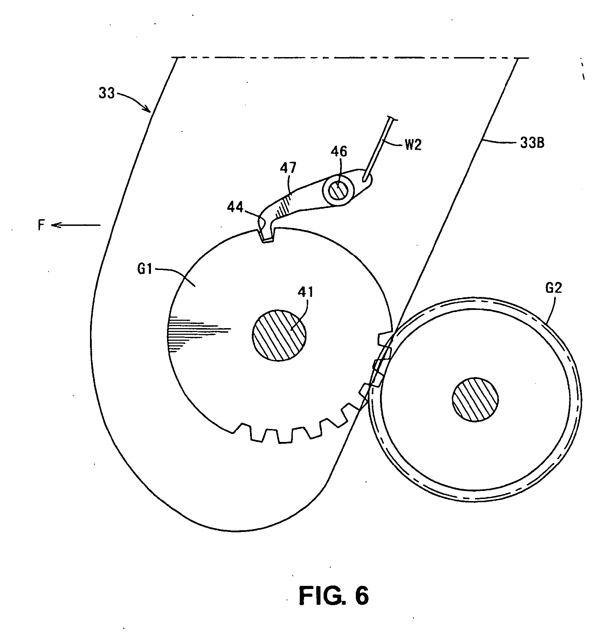

A substantially circular plate **43** having one or more recesses **43a, 43b** is tightly connected to the rotational axis **41** preferably via a key, spline or the like, not illustrated, and a gear **G1** having a recess **44** (see FIGS. **5** and **6**) is loosely inserted to the rotational axis **41.**

Above the circular plate **43,** a lock lever **47** is attached to the seat back frame **42** via a bracket **45** and a support axis **46.** Below the circular plate **43,** meanwhile, another lock lever **49** is pivotally connected to the support plate **40** and a journal member **48.**

Meanwhile, levers **50, 51** are provided at an upper shoulder portion of the seat back **33B.** The lever **50** and the lower lock lever **49** are interconnected by a wire **W1,** and the lever **51** and the upper lock lever **47** are interconnected by a wire **W2.**

When the lever **50** is pulled or operated, the lock lever **49** disengages with (unlocked) the recess **43b** of the circular plate **43** via the wire **W1,** which makes a mode in which the seat back **33B** can be independently operated, so the seat back **33B** can be folded substantially forward on the seat cushion **33C** from its use or seating state. Meanwhile, the other lever **51** is pulled or operated, the lock lever **47** is moved to engage with the recess **43a** of the circular plate **43** and the recess **44** of the gear **G1** via the wire **W2,** which changes a state from an unlock state shown in FIG. **5** to a lock state shown in FIG. **6****,** in which the gear **G1** can rotate as the seat back **33B** moves (rotates).

The gear **G1** has its gear portion to an extent of a rotating area of the seat back **33B** as shown in FIGS. **5** and **6****.** A gear **G3** to move the baggage-compartment board **36** (preferably is provided behind the gear **G1** so as to) engages with the gear **G1** preferably via an idle gear **G2** as shown.

Herein, the gears **G2, G3** are supported so as to be rotatable with respect to a vehicle side body (vehicle body side face portion). A link **52** is integrally formed with the gear **G3** as shown in FIG. **3****.** The main board **36m** of the baggage-compartment board **36** is coupled to a tip of the link **52** via a pin **53.**

The above-described members **G1, G2, G3, 52** form a linkage mechanism **54,** which links a substantially vertical movement of the baggage-compartment board **36** to a folding and returning movement of the seat back **33B.**

Further, the members **47, W2, 51** form a control mechanism **55,** which selects a linkage of movements of the seat back **33B** and the baggage-compartment board **36** or a non-linkage thereof (or, in other words, limits or defines a linkage of movement of the baggage-compartment board **36** with respect to movement of the seat back **33B**). This mechanism **55** includes a lever **51** as a operational portion that a passenger (preferably manually) operates. The unlock state shown in FIG. **5****,** where the lock lever **47** is moved by the lever **51** so as to disengage with the recess **44** of the gear **G1,** makes a mode in which the baggage-compartment board **36** can be substantially vertically moved independently.

The above-described linkage mechanism **54** comprises one or more, preferably a pair of mechanisms that are provided preferably at or near both sides of between the seat back **33B** and the baggage-compartment board **36** as shown in FIG. **2****.** A drive portion including the gear **G1** is at least partly covered with a cover member **56** as shown in FIG. **4****.**

In the figures, an arrow **F** shows a vehicle forward direction, an arrow **IN** shows an vehicle inward direction, and an arrow **OUT** shows a vehicle outward direction.

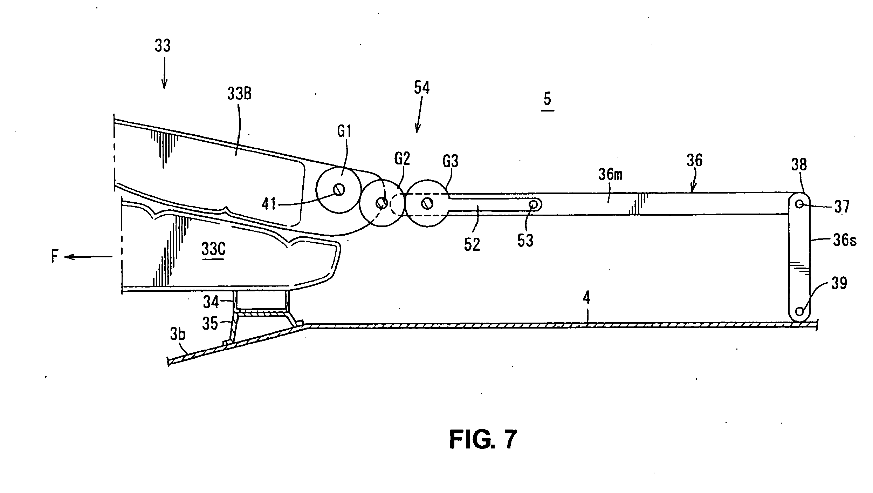

Operations of the above-described rear baggage compartment structure of a vehicle will be described. By pulling or operating the lever **50** shown in FIG. **4****,** the lower lock lever **49** is moved via the wire **W1** and disengages. Herein, the upper lock lever **47** remains substantially in the state shown in FIG. **5** (unlock state). Accordingly, the seat back **33B** in its use or seating state shown in FIG. **3** can be moved or pivoted independently to be folded substantially on the seat cushion **33C** as shown in FIG. **7****.** Namely, by selecting a non-linkage state of the control mechanism **55** as shown in FIGS. **4** and **5****,** the linkage of movement of the baggage-compartment board **36** with respect to the folding movement of the seat back **33B** is limited to be disabled.

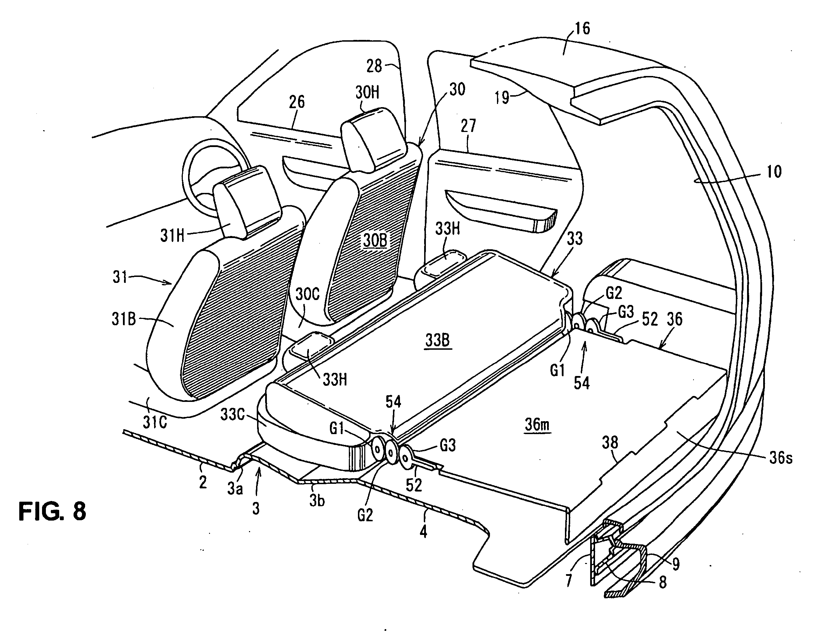

By pulling or operating both of the levers **50, 51** shown in FIG. **4** at the same time, the lower lock lever **49** disengages and the upper lock lever **47** engages with the recess **43a** of the circular plate **43** and the recess **44** of the gear **G1** preferably at the substantially same time as shown in FIG. **6****.** Accordingly, when the baggage-compartment board **36** in the lower position shown in FIG. **3** is pulled substantially upward preferably with a manual operation, the members **G1, G2, G3, 52** of the linkage mechanism **54** rotate or pivot in an arrow direction of FIG. **3****.** Thereby, a rotational force of the gear **G1** is transmitted to the circular plate **43** via the lock lever **47** in the lock state, so the circular plate **43** drives the rotational axis **41** in a direction of seat back folding. As a result, as shown in FIGS. **7** and **8****,** the seat back **33B** can be moved to be folded on the seat cushion **33C** with a linkage of the substantially upward movement of the baggage-compartment board **36.**

A back face of the seat back **33b** in the folded or inclined state shown in FIGS. **7** and **8** and an upper face of the main board **36m** of the baggage-compartment board **36** form a substantially continuous and flat baggage-compartment face.

When the seat back **33B** is returned to the use state from its folded state shown in FIGS. **7** and **8****,** the linkage of movements of the both **36, 33B** by the linkage mechanism **54** can be disabled (non-linkage selection). Namely, when the lock lever **47** is operated to the state (unlock state) shown in FIG. **5** by the operation of the lever **51** of the control mechanism **55,** only the seat back **33B** can be returned towards or to its use or seating state from its folded or inclined state. The baggage-compartment board **36** can be maintained in its upward-moved position shown in FIGS. **7** and **8****.**

Meanwhile, after the seat back **33B** has been folded or inclined as shown in FIGS. **7** and **8****,** the seat back **33B** can be returned towards or to the use or seating state with the linkage of the downward movement of the baggage-compartment board **36** from its upper position. Namely, when the lock lever **47** is maintained or positioned in the state (lock state) shown in FIG. **6** by the operation of the lever **51** of the control mechanism **55,** both the seat back **33B** and the baggage-compartment board **36** move with the linkage by movement (pushing substantially down) the baggage-compartment board **36** from its upper position. Thereby, the seat back **33B** can be returned to the use or seating state with the linkage of the operation or substantially downward movement of the baggage-compartment board **36.**

Further, when only the baggage-compartment board **36** is operated or moved substantially downward from its upward-moved or -inclided state shown in FIGS. **7** and **8****,** the linkage of movements of the both **36, 33B** can be disabled (non-linkage selection) by unlocking the lock lever **47** as shown in FIG. **5** with the operation of the lever **51** of the control mechanism **55.** Thereby, only the baggage-compartment board **36** can be moved to its lower position from its upper position, while the seat back **33B** can be kept in its folded state.

According to the rear baggage compartment structure of a vehicle of the embodiment shown in FIGS. **1** to **10****,** the rear seat **33** with the seat cushion **33C** and the seat back **33B** is provided on the floor panel (particularly see the kick-up floor portion **3b**), the baggage compartment **5** is formed substantially behind the rear seat **33,** the rear seat **33** is configured to be foldable in such a manner that the seat back **33B** is folded on the seat cushion **33C,** and the baggage-compartment board **36** is provided in the baggage compartment **5.** This board **36** is supported so as to move at least substantially vertically, and there is provided the linkage mechanism **54** to operate the seat back **33B** to be folded on the seat cushion **33C** as the baggage-compartment board **36** moves substantially upward or towards its higher position.

According to the above-described structure, the seat back **33B** can be folded on the seat cushion **33C** with the linkage of movements as the baggage-compartment board **36** moves upward, and the difference in level between the back face of the folded seat back **33B** and the baggage-compartment floor **36** can be diminished or substantially leveled out. Thereby, the operability at the baggage loading (unloading) can be improved.

Further, the back face of the seat back **33B** in its folded state and the upper face of the baggage-compartment board **36** (specifically, the upper face of the main board **36m**) that has moved substantially upward form the substantially continuous baggage-compartment face. Thereby, diminishing the difference in level and/or usage improvement of the baggage compartment can be attained by forming the substantially continuous baggage-compartment face.

Also, the linkage mechanism **54** comprises the control mechanism **55** to select the linkage of movements of the seat back **33B** and the baggage-compartment board **36** or the non-linkage thereof. Thereby, in particular, the baggage-compartment board **36** can be moved substantially vertically independently from the seat back **33B** by selecting the above-described non-linkage of movements.

In addition, the control mechanism **55** is operated by the passenger's operation. Thereby, the selection of the linkage or the non-linkage of movements can be attained by the passenger at need.

And, the control mechanism **55** can be configured such that the baggage-compartment board **36** does not move as the seat back **33B** is moved to be folded on the seat cushion **33C.** Thereby, the seat back **33B** can be folded independently.

Also, the control mechanism **55** can be configured such that when the seat back **33B** is operated towards or to its use or seating state after the seat back **33B** has been folded or inclined towards or substantially on the seat cushion **33C,** the non-linkage of movements of the baggage-compartment board **36** and the seat back **33B** is selected. Thereby, the seat back **33B** can be moved from its folded state (laying or inclined position) to its use state (upright or seating position), keeping the baggage-compartment board **36** moved substantially upward. Thus, the return movement of the seat back **33B** towards or to its used state can be attained while the baggage is placed on the baggage-compartment board moved upward. Thus, baggage loading and/or passenger's sitting in the rear seat (many passengers) can be attained.

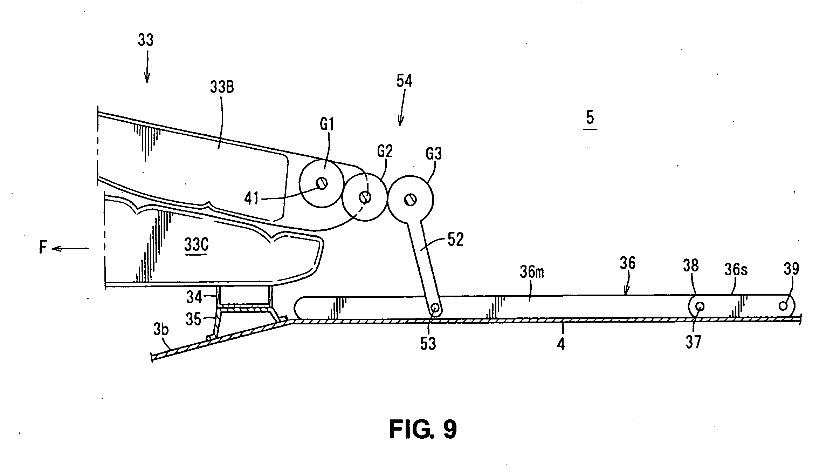

Furthermore, the linkage mechanism **54** preferably comprises the control mechanism **55** that limits the linkage of movement of the baggage-compartment board **36** with respect to movement of the seat back **33B,** allowing the linkage of movement of the seat back **33B** with respect to the baggage-compartment board **36.** Thereby, the seat back **33B** can be folded independently, and there can be provided a deep and large baggage compartment with the seat back **33B** that is folded and the baggage-compartment board **36** that is located below as shown in FIG. **9****.**

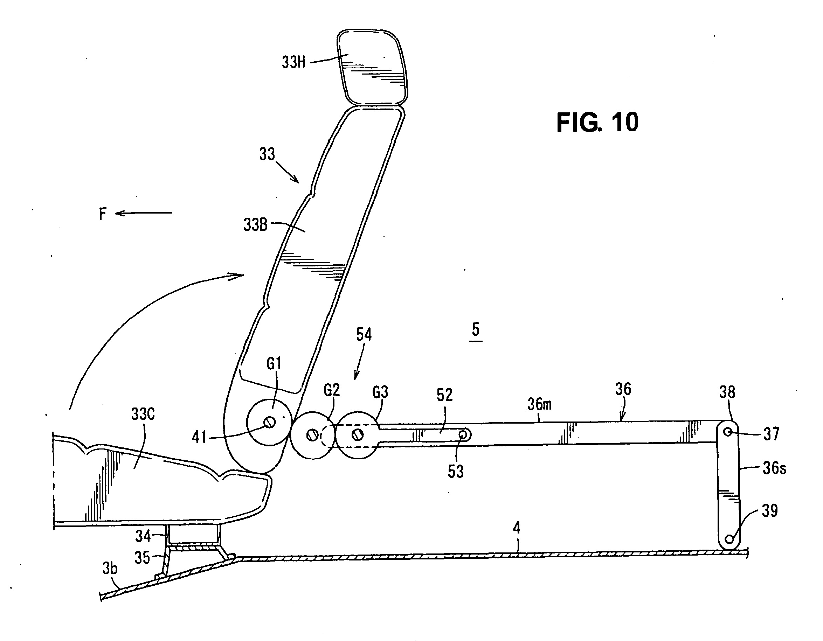

Also, the linkage mechanism **54** preferably comprises the control mechanism 55 that limits the linkage of movement of the baggage-compartment board **36** with respect to movement of the seat back **33B** when the seat back **33B** is operated to its use state after the seat back **33B** has been folded or inclined substantially on the seat cushion **33C,** allowing the linkage of movement of the baggage-compartment board **36** with respect to movement of the seat back **33B** toward the folded state. Thereby, the seat back **33B** can be returned to its use or seating state, keeping the baggage-compartment board **36** moved upward as shown in FIG. **10****.** Namely, both passenger's sitting in the seat **33** and baggage loading onto the baggage-compartment board **36** can be attained.

Further, the linkage mechanism **54** comprises the control mechanism **55** that limits the linkage of movement of the baggage-compartment board **36** with respect to movement of the seat back **33B** when the seat back **33B** is moved toward its folded or inclined state and when the seat back **33B** is operated towards or to its use or seating state after the seat back **33B** has been folded on the seat cushion **33C.** Thereby, ensuring the linkage of movements of the baggage-compartment board **36** and the seat back **33B** with the linkage mechanism **54,** the seat back **33B** can be folded independently as shown in FIG. **9** or returned towards or to its use or seating state from its folded state as shown in FIG. **3** with the control mechanism **55.**

Additionally, the control mechanism **55** preferably comprises the operational portion (see the lever **51**) to select the linkage state or the linkage limitation state, which is or can be selected by the operation of the passenger. Thereby, selection of linkage or linkage limitation (non-linkage) of movements can be conducted easily with the passenger's operation of the operational portion (see the lever **51**) at need, so operability at the baggage loading or passenger's additional ingress can be improved.

### EMBODIMENT 2

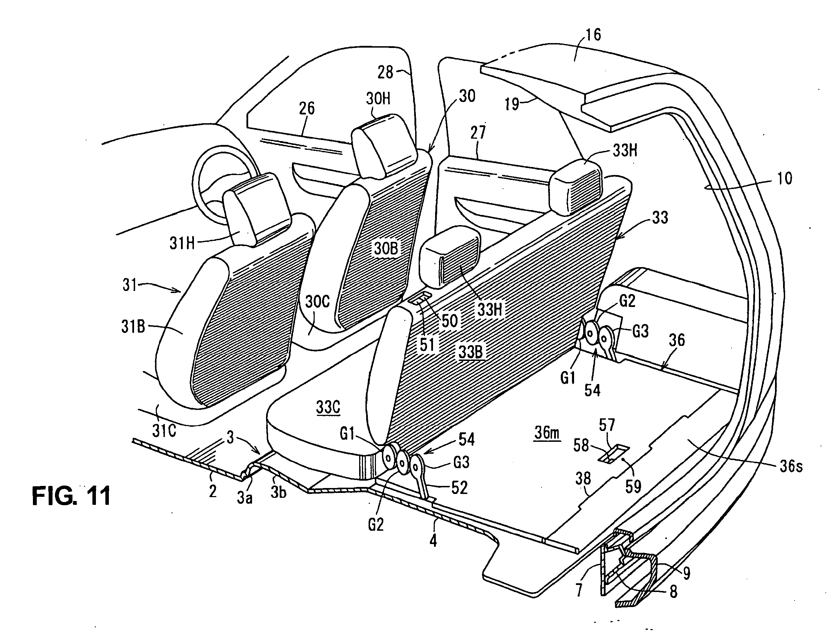

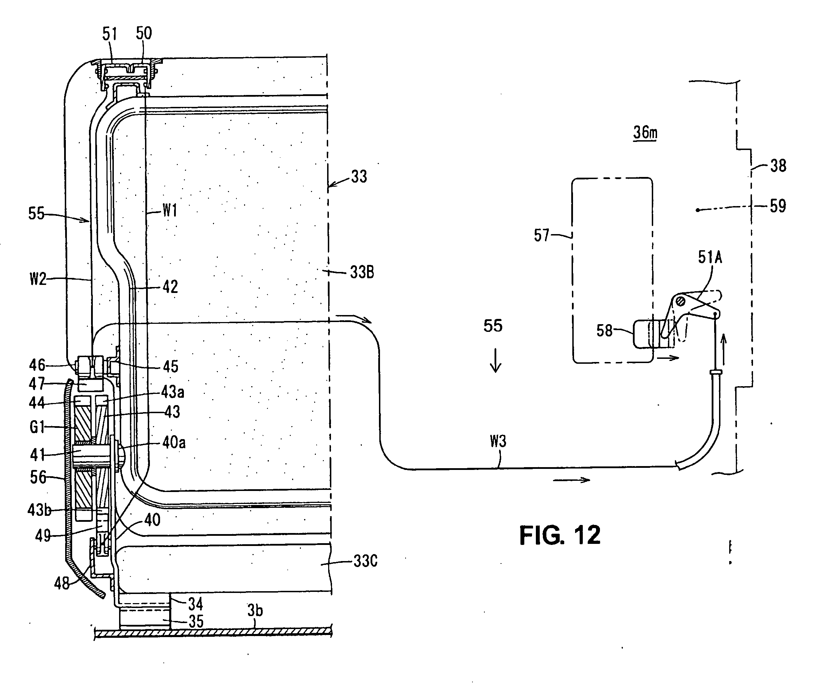

FIGS. **11** to **13** show another embodiment of the rear baggage compartment structure of a vehicle. As shown in FIGS. **11** and **12** (a left part of FIG. **12** is a sectional view similar to FIG. **4****,** a right part of FIG. **12** is a plan view of a major portion of FIG. **11****,** thus FIG. **12** is a combined system diagram), there is provided an opening portion **57** to allow a passenger's hand to therein at the main board **36m** of the baggage compartment board **36.** The opening portion **57** and part of the main board **36m** forms a handle portion **59.** A lever **51A** is pivotally supported at the handle portion **59,** which performs a similar function to the lever **51** provided at the upper shoulder portion of the seat back **33B.** One end of this lever **51A** and the lock lever **47** are interconnected by a wire **W3.** At the handle portion **59** is provided a slider **58** to operate the other end of the lever **51A.** Thus, the slider **58** may be operated by the passenger's hand being inserted through the opening portion **57.**

Namely, by operating the other end of the lever **51A** with the slider **58,** the lever. **51A** rotates from a state shown by a solid line to another state shown by a broken line in FIG. **12****.** Thereby, the wire **W3** is pulled in an arrow direction in FIG. **12****,** and then the lock lever **47** comes to engage with the recess **43a** of the circular plate **43** and the recess **44** of the gear **G1** at the same time, which makes the lock state (linkage mode) shown in FIG. **6****.**

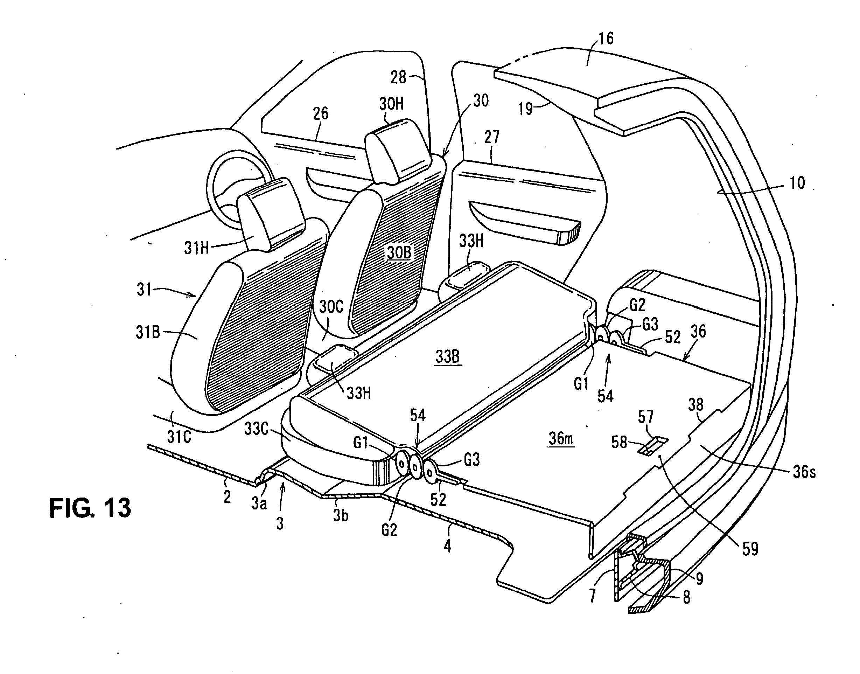

Namely, the embodiment disclosed in FIGS. **11** to **13** has the members **57, 58, 51A** and **W3** that are added to the embodiment disclosed in FIGS. **1** to **10****.** The slider **58,** lever **51A,** wire **W3** and lock lever **47** form the control mechanism **55,** in which the linkage or the non-linkage of movements of the baggage-compartment board **36** and the seat back **33B** is selected with the slider **58.** Accordingly, in the present embodiment, when the baggage-compartment board **36** is pushed down after operating the lock lever **47** to engage with the recesses **43a, 44** with the slider **58** in a state shown in FIG. **13** where the seat back **33B** is folded or inclined substantially on the seat cushion **33C** and the baggage-compartment board **36** is located in the upper position, the seat back **33B** can be returned towards or to its use or seating state of FIG. **11** by the linkage of the downward movement of the baggage-compartment board **36.**

Thus, the linkage mechanism **54** of the embodiment of FIGS. **11** to **13** comprises the slider **58** as an operational portion that is provided so as to be operative from a side of the baggage-compartment board **36** to select the linkage of movements of the seat back **33B** and the baggage-compartment board **36** or the non-linkage. Thereby, the selection of linkage or non-linkage of movements can be attained by using the operation portion (slider **58**) located on the side of the baggage-compartment board **36** at the substantially upward/downward movement of the baggage-compartment board **36,** so the operability can be improved.

Structures, operations and effects of other components of the present embodiment shown in FIGS. **11** to **13** are similar or substantially the same as those of the components of the previous embodiment shown in FIGS. **1** to **10****.** Accordingly, identical reference characters are applied to similar or the same components and detailed descriptions of those components are omitted here.

### EMBODIMENT 3

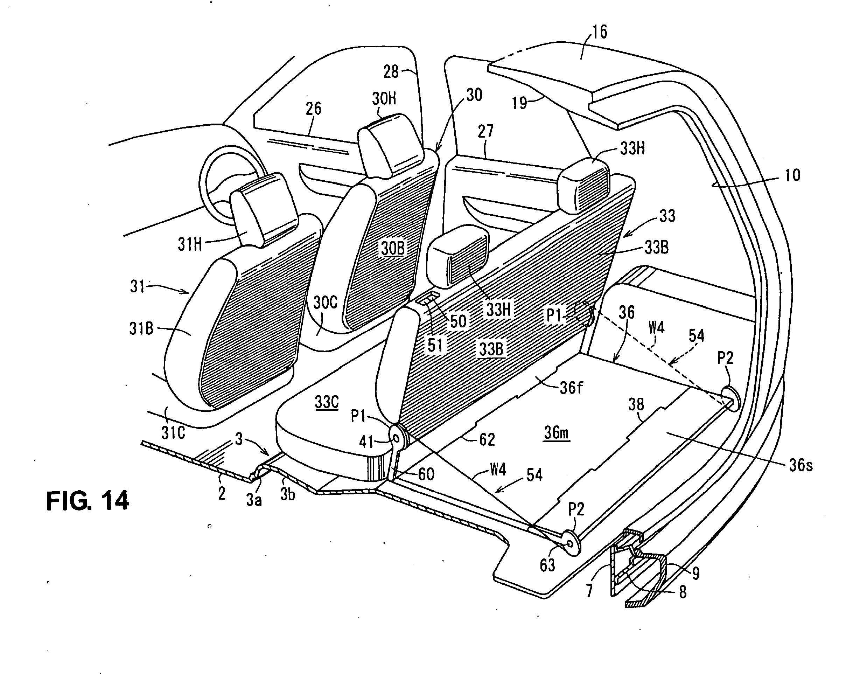

FIGS. **14** to **18** show further another embodiment of the rear baggage compartment structure of a vehicle. The previous embodiments 1 and 2 apply the linkage mechanism **54** with the gear connecting structure, but the present embodiment of FIGS. **14** to **18** uses the linkage mechanism **54** that comprises one or more pulleys **P1, P2** and at least one wire **W4.**

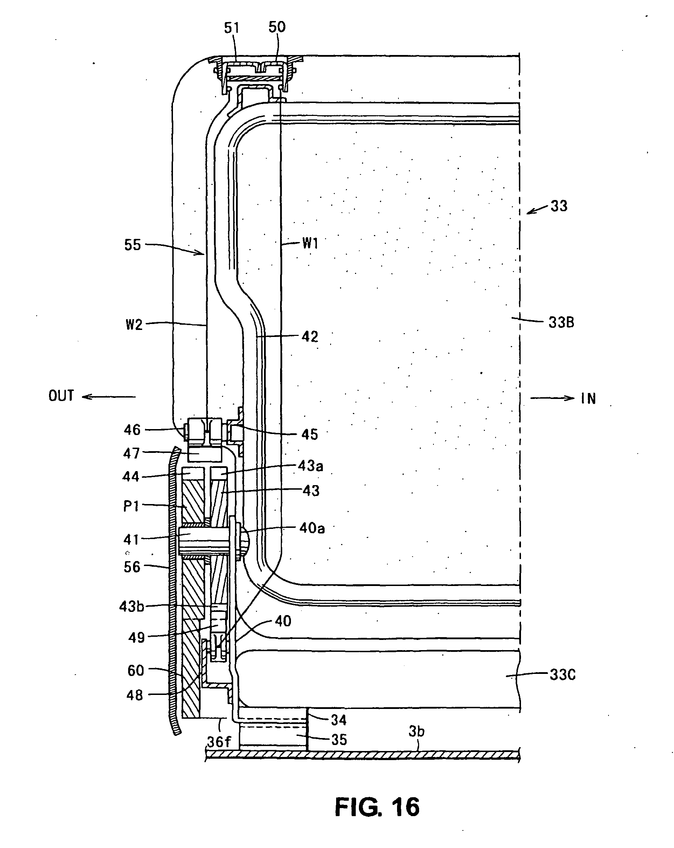

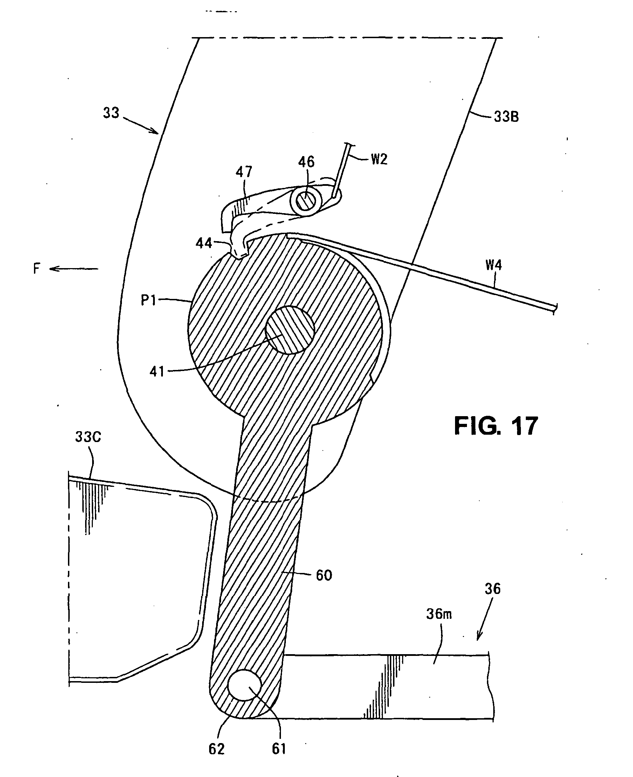

Namely, the pulley **P1** is loosely inserted to the rotational axis **41** shown in FIG. **16****,** which has the recess **44** as shown in FIGS. **16** and **17****.** A link portion **60** is integrally or unitarily formed with the pulley **P1.**

The pulley **P1** preferably is formed of a pair of pulley members that are disposed at both-side lower faces of the seat back **33B** as shown in FIG. **14****.** Between the pulleys **P1, P1** and the link portions **60, 60** is provided a front board **36f** that extends substantially in the vehicle width direction.

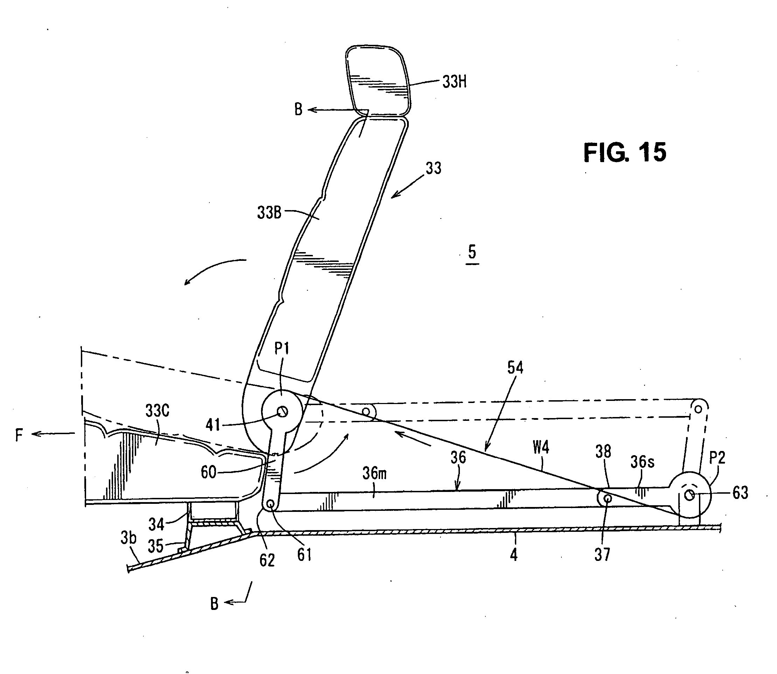

Namely, the baggage-compartment board **36** preferably comprises the front board **36f,** main board **36m** and sub board **36s** that preferably are split into two or more, e.g. three parts (plural split). One end of the front board **36f** and the front end of the main board **36m** are pivotally coupled via a hinge portion **62** including a hinge pin **61** (see FIG. **15**). Herein, a rear end of the main board **36m** and one end of the sub board **36s** are pivotally coupled via the at least one hinge portion **38** including the hinge pin **38,** which is similar or the same as the previous embodiment.

The pulleys **P2, P2** are provided at both-side base end portions of the sub board **36s** and pulley axes **63, 63** of the pulleys **P2, P2** are pivotally supported at a body such as the baggage-compartment floor **4.** Between the pulley **P1** at the seat back **33B** and the pulley **P2** at the baggage-compartment floor **4** is provided the wire **W4** for providing a substantially continuous movement. Namely, in the present embodiment, the pulleys **P1, P2,** link portion **60** and wire **W4** preferably form (part of) the linkage mechanism **54,** in which the movement or operation of the baggage-compartment board **36** is effectively utilized as a help of the movement or operation linkage of the linkage mechanism **54.** Herein, the lock lever **47,** wire **W2,** lever **51** form the control mechanism **55.**

Hereinafter, the operations of the above-described rear baggage compartment structure will be described. By only operating or pulling the lever **50** shown in FIG. **16****,** the lower lock lever **49** is moved via the wire **W1** and disengages. Herein, the upper lock lever **47** remains in the state shown in FIG. **17** (unlock state). Accordingly, the seat back **33B** in its use or seating state shown in FIG. **15** can be moved independently to be folded on the seat cushion **33C** as shown by a broken line in FIG. **15****.**

Namely, by selecting an non-linkage state of the control mechanism **55** as shown by the solid line in FIGS. **16** and **17****,** the linkage of movement of the baggage-compartment board **36** with respect to the folding movement of the seat back **33B** can be limited to be disabled.

By operating or pulling the both levers **50, 51** shown in FIG. **16** at the substantially same time, the lower lock lever **49** disengages and the upper lock lever **47** engages with the recess **43a** of the circular plate **43** and the recess **44** of the gear **G1** at the substantially same time as shown by the broken line in FIG. **17****.** Accordingly, when the baggage-compartment board **36** in the lower position shown in FIG. **15** is pulled or moved substantially upward e.g. with the manual operation, the members **P2, 54, 60, P1** of the linkage mechanism **54** rotate or pivot in an arrow direction of FIG. **15****.** Thereby, a rotational force of the pulley **P1** is transmitted to the circular plate **43** via the lock lever **47** in the lock state, so the circular plate **43** drives the rotational axis **41** in a direction of seat back folding. As a result, as shown by the broken line in FIGS. **15** and the solid line in FIG. **17****,** the seat back **33B** can be moved to be folded on the seat cushion **33C** with the linkage of the substantially upward movement of the baggage-compartment board **36.**

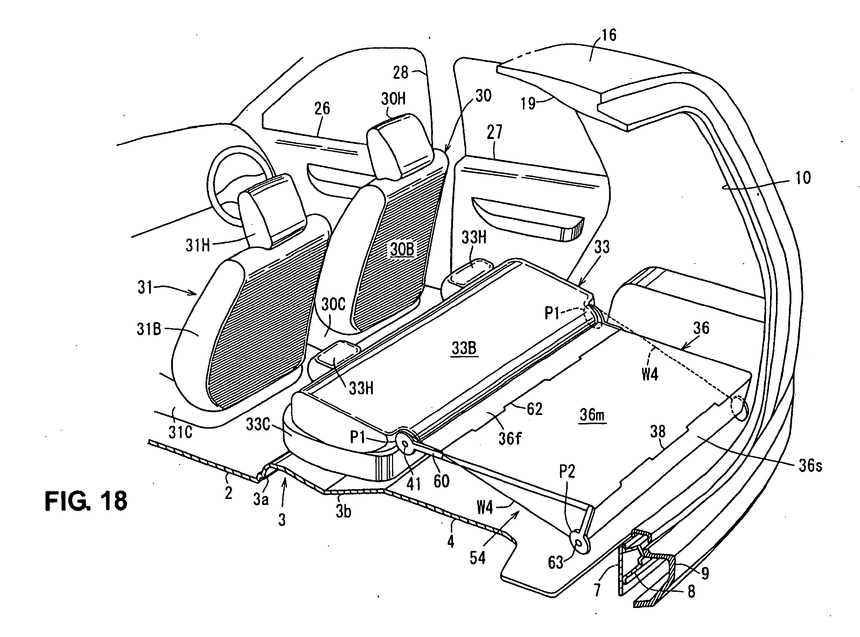

The back face of the seat back **33b** in the folded state shown in FIG. **18** and the upper face of the main board **36m** of the baggage-compartment board **36** form a substantially continuous and flat baggage-compartment face.

When the seat back **33B** is returned towards or to the use or seating state from its folded state shown by the broken line in FIG. **15****,** the linkage of movements of the both **36, 33B** by the linkage mechanism **54** preferably can be limited so as to be disabled (non-linkage selection). Namely, when the lock lever **47** is operated to the state (unlock state) shown by the solid line in FIG. **16** by the operation of the lever **51** of the control mechanism **55,** only the seat back **33B** can be returned towards or to its use or seating state from its folded or inclined state. The baggage-compartment board **36** can be kept in its substantially upward-moved position shown by the broken line in FIG. **15****.**

Meanwhile, after the seat back **33B** has been folded shown by the broken line in FIG. **15****,** the seat back **33B** can be returned towards or to the use or seating state with the linkage of the substantially downward movement of the baggage-compartment board **36** from its upper position. Namely, when the lock lever **47** is maintained in the state (lock state) shown by the broken line in FIG. **17** by the operation of the lever **51** of the control mechanism **55,** both boards **36m, 36s** move with the linkage by pushing down or displacing the baggage-compartment board **36** from its upper position. Thereby, the pulley **P2** rotates counterclockwise in FIG. 15, and the wire **W4** is pulled rearward. Then, the pulley **P1** is rotated in a direction of raising the seat back. Thus, the rotational force of the pulley **P1** is transmitted to the circular plate **43** via the lock lever **47,** and thereby the rotational axis **41** is driven in the direction of raising the seat back. As a result, the seat back **33B** can be returned towards or to the use or seating state with the linkage of the displacement or substantially downward movement of the baggage-compartment board **36.**

Further, when only the baggage-compartment board **36** is moved substantially downward from its upward-moved state shown by the broken line in FIG. **15****,** the linkage of movements of the both **36, 33B** preferably can be limited to be disabled (non-linkage selection) by unlocking the lock lever **47** as shown by the solid line in FIG. **17** with the operation of the lever **51** of the control mechanism **55.** Thereby, the linkage of movements of the both members **36, 33B** is disabled, so only the baggage-compartment board **36** can be moved towards or to its lower position from its upper position, and the seat back **33B** can be maintained in its folded or inclined state.

Also, when the seat back **33B** is folded or inclined forward, by pulling only the lever **50** to unlock the lock lever **49** via the wire **W1** and maintaining the upper lock lever **47** in the limitation mode shown by the solid line in FIG. **17****,** the linkage of the upward movement of the baggage-compartment board **36** can be limited with respect to the folding movement of the seat cushion **33B** on the seat cushion **33C** from the upright position shown by the solid line in FIG. **15****.** The baggage-compartment board **36** is remained in its lower position as shown by the solid line in FIG. **15****.**

Herein, although there exists a difference in level between the back face of the seat back **33B** and the baggage-compartment floor **4,** a continuous and deep baggage-compartment space is formed. Thus, the control mechanism **55** can limit the linkage of movement of the baggage-compartment board **36** with respect to movement of the seat back **33B,** allowing the linkage of the movement of seat back **33B** with respect to the baggage-compartment board **36.**

Also, the control mechanism **55** can limit the linkage of movement of the baggage-compartment board **36** with respect to movement of the seat back **33B** when the seat back **33B** is operated to its use state after the seat back **33B** has been folded on the seat cushion **33C,** allowing the linkage of movement of the baggage-compartment board **36** with respect to movement of the seat back **33B** toward the folded state.

Namely, when the seat back **33B** is moved from the substantially upright state (use or seating state) shown by the solid line in FIG. **15** to the folded or inclined state, both levers **50, 51** of FIG. **16** are operated or pulled at the substantially same time to make the lower lock lever **49** disengage and make the upper lover **47** engage with the recess **44** of the pulley **P1** and the recess **43a** of the circular plate **43,** thereby making the linkage mode shown by the broken line in FIG. **17****.** Thereby, the pulleys **P1, P2,** link portion **60,** and wire **W4** are driven in the arrow direction in FIG. **15** as the seat back **33B** is operated to be folded. Accordingly, the baggage-compartment board **36** can be moved substantially upward, as shown by the broken line in FIG. **15****,** with the linkage of the folding movement of the seat back **33B.**

In the state where the baggage-compartment board **36** is in the upper position shown by the broken line in FIG. **15****,** when the seat back **33B** is returned towards or to its use or seating state shown by the solid line from its folded or inclined state shown by the broken line in FIG. **15****,** the linkage of the movement of the baggage-compartment board **36** with the respect to the (preferably manual) operation to move the seat back **33B** from its substantially lying or inclined position to its substantially upright position is limited when the upper lock lever **47** is in the limitation mode shown by the solid line in FIG. **17** by the operation of the lever **51.** Thereby, the baggage-compartment board **36** is kept in the upper position, so the seat back **33B** can be returned to the use state with the baggage-compartment board **36** with any baggage placed on it.

Thus, the control mechanism **55** can limit the linkage of movement of the baggage-compartment board **36** with respect to movement of the seat back **33B** when the seat back **33B** is operated to its use state after the seat back **33B** has been folded on the seat cushion **33C,** allowing the linkage of movement of the baggage-compartment board **36** with respect to movement of the seat back **33B** toward the folded state.

Further, the control mechanism **55** can limit the linkage of movement of the baggage-compartment board **36** with respect to movement of the seat back **33B** when the seat back **33B** is moved toward its folded or inclined state and when the seat back **33B** is operated to its use state after the seat back **33B** has been folded substantially on the seat cushion **33C.**

Namely, when the seat back **33B** is moved from the use or seating state shown by the solid line in FIG. **15** towards or to the folded or inclined state shown by the broken line, only the lever **50** is pulled to unlock the lower lock lever **49** via the wire **W1** and the limitation mode is kept with the lock lever **47** (shown by the solid line in FIG. **17**). Thereby, the baggage-compartment board **36** is not moved upward even when the seat back **33B** is moved to be folded substantially on or inclined towards the seat cushion **33C** as shown by the broken line from its use state shown by the solid line in FIG. **15****.** Also, even when the seat back **33B** is returned towards or to the use state shown by the solid line from its folded or inclined state shown by the broken line in FIG. **15****,** the baggage-compartment board **36** keeps its position located below.

Thus, the control mechanism **55** limits the linkage of movement of the baggage-compartment board **36** with respect to movement of the seat back **33B** both of the time when the seat back **33B** is moved toward or to its folded or inclined state and when the seat back **33B** is operated towards or to its use or seating state after the seat back **33B** has been folded on the seat cushion **33C,** allowing only the seat back **33B** to move (substantially upward) or pivot independently.

As described above, the linkage mechanism comprising the pulleys **P1, P2** and wire **W4** that are shown in FIGS. **14** to **18** is applicable as the connecting mechanism **54** in place of the gear connecting structure of the previous embodiment 1. Thus, this linkage mechanism performs similar or substantially the same operations and effects as that of the previous embodiment 1. Accordingly, identical reference characters are applied to similar or the same components in FIGS. **14** to **18** and detailed descriptions of those components are omitted here.

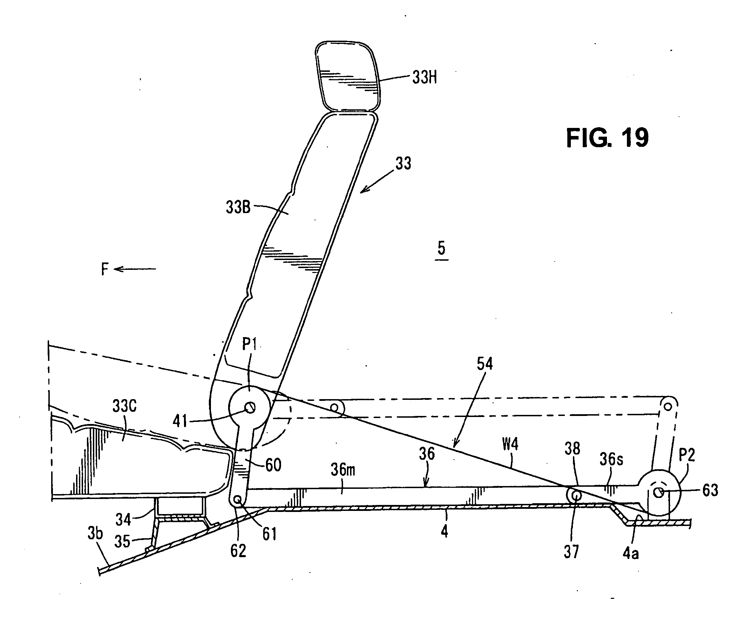

A structure shown in FIG. **19** may be applied in place of the structure shown in FIG. **15****.** Namely, a recess **4a** may be formed at a portion of the baggage-compartment floor **4** where the pulley **P2** is disposed in such a manner that the wire **W4** does not interfere with the recess **4a** and the lower faces of the main board **36m** and the sub board **36s** contact the upper face of the baggage-compartment floor **4.**

Thereby, the baggage (weight of the baggage) placed on the baggage-compartment board **36** in the lower position can be received at the baggage-compartment floor **4,** so durability of the baggage-compartment board **36** can be improved.

## Claims

1. A rear baggage compartment structure of a vehicle, comprising:
at least one seat (**33**) provided on a floor panel (**3b**) of a vehicle body, the seat (**33**) including a seat cushion (**33C**) and a seat back (**33B**), the seat (**33**) being configured to be foldable in such a manner that the seat back (**33B**) is folded towards or on the seat cushion (**33C**);
a baggage compartment (**5**) formed behind the seat (**33**);
a baggage-compartment board (**36**) provided in the baggage compartment (**5**), the board (**36**) being supported so as to move at least substantially vertically; and
a linkage mechanism (**54**) to link an operation of the seat back (**33B**) of the seat to be folded substantially on the seat cushion (**33C**) and a movement of the baggage-compartment board (**36**),
**characterized in that** said linkage mechanism (**54**) comprises a control mechanism (**55**) to select a linkage of movements of the seat back (**33B**) and the baggage-compartment board (**36**) or a non-linkage thereof, and wherein said control mechanism (**55**) is operated by an operation of a passenger.

2. The rear baggage compartment structure of a vehicle of claim 1, wherein the linkage mechanism (**54**) further comprises a gear (**G1**) or pulley (**P1**), wherein said gear (**G1**) or pulley. (**P1**) is loosely inserted to a rotational axis (**41**) of the seat back (**33B**).

3. The rear baggage compartment structure of a vehicle of claim 1 or 2, wherein a back face of the seat back (**33B**) in a folded state and an upper face of the baggage-compartment board (**36**) that has moved upward form a substantially continuous baggage-compartment face.

4. The rear baggage compartment structure of a vehicle of any one of the preceding claims , wherein said control mechanism (**55**) is configured such that the baggage-compartment board (**36**) does not move as the seat back (**33B**) is moved to be folded on the seat cushion (**33C**).

5. The rear baggage compartment structure of a vehicle of any one of the preceding claims , wherein said control mechanism (**55**) is configured such that when the seat back (**33B**) is operated to a use state thereof after the seat back (**33B**) has been folded on the seat cushion (**33C**), the non-linkage of movements of the baggage-compartment board (**36**) and the seat back (**33B**) is selected.

6. The rear baggage compartment structure of a vehicle of any one of the preceding claims, wherein said linkage mechanism (**54**) comprises an operational portion (**58**) that is provided so as to be operative at least from a side of the baggage-compartment board (**36**) to select a linkage of movements of the seat back (**33B**) and the baggage-compartment board (**36**) or a non-linkage thereof.

7. The rear baggage compartment structure of a vehicle of any one of the preceding claims, wherein said linkage mechanism (**54**) comprises a control mechanism (**55**) that limits a linkage of movement of the baggage-compartment board (**36**) with respect to movement of the seat back (**33B**), allowing a linkage of movement of seat back (**33B**) with respect to movement of the baggage-compartment board (**36**).

8. The rear baggage compartment structure of a vehicle of claim 1, wherein said linkage mechanism (**54**) comprises a control mechanism (**55**) that limits a linkage of movement of the baggage-compartment board (**36**) with respect to movement of the seat back (**33B**) when the seat back (**33B**) is operated to a use state thereof after the seat back (**33B**) has been folded on the seat cushion (**33C**), allowing a linkage of movement of the baggage-compartment board (**36**) with respect to movement of the seat back (**33B**) toward a folded state.

9. The rear baggage compartment structure of a vehicle of claim 1, wherein said linkage mechanism (**54**) comprises a control mechanism (**55**) that limits a linkage of movement of the baggage-compartment board (**36**) with respect to movement of the seat back (**33B**) when the seat back (**33B**) is moved toward a folded state and when the seat back (**33B**) is operated to a use state thereof after the seat back (**33B**) has been folded on the seat cushion (**33C**).

10. The rear baggage compartment structure of a vehicle of any one of claims 7 through 9, wherein said control mechanism (**55**) comprises an operational portion (**51; 58**) to select a linkage state or a linkage limitation state, which is selected by an operation of a passenger.

## Patentansprüche

1. Heckkofferraumaufbau eines Fahrzeugs, der umfasst:
wenigstens einen Sitz (33), der auf einem Bodenblech (3b) einer Fahrzeugkarosserie bereitgestellt ist, wobei der Sitz (33) ein Sitzpolster (33C) und eine Sitzlehne (33B) umfasst, wobei der Sitz (33) aufgebaut ist, um in einer derartigen Weise klappbar zu sein, dass die Sitzlehne (33B) in Richtung zu oder auf das Sitzpolster (33C) geklappt wird;
einen Kofferraum (5), der hinter dem Sitz (33) ausgebildet ist;
eine Kofferraumplatte (36), die in dem Kofferraum (5) bereitgestellt ist, wobei die Platte (36) gehalten wird, um sich wenigstens vertikal zu bewegen; und
einen Verbindungsmechanismus (54), um eine Bedienung der Sitzlehne (33B) des Sitzes, die im Wesentlichen auf das Sitzpolster (33C) geklappt werden soll, und eine Bewegung der Kofferraumplatte (36) zu verbinden,
**dadurch gekennzeichnet, dass** der Verbindungsmechanismus (54) einen Steuermechanismus (55) umfasst, um eine Verbindung von Bewegungen der Sitzlehne (33B) und der Kofferraumplatte (36) oder deren Nichtverbindung auszuwählen, und wobei der Steuermechanismus (55) durch eine Betätigung eines Fahrgasts bedient wird.

2. Heckkofferraumaufbau eines Fahrzeugs nach Anspruch 1 wobei der Verbindungsmechanismus (54) ferner ein Zahnrad (G1) oder eine Riemenscheibe (P1) umfasst, wobei das Zahnrad (G1) oder die Riemenscheibe (P1) lose in eine Drehachse (41) der Sitzlehne (33B) eingesetzt ist.

3. Heckkofferraumaufbau eines Fahrzeugs nach Anspruch 1 oder 2, wobei eine Rückseite der Sitzlehne (33B) in einem zusammengeklappten Zustand und eine obere Seite der Kofferraumplatte (36), die sich nach oben bewegt hat, eine im Wesentlichen kontinuierliche Kofferraumfläche bilden.

4. Heckkofferraumaufbau eines Fahrzeugs nach einem der vorhergehenden Ansprüche, wobei der Steuermechanismus (55) derart aufgebaut ist, dass die Kofferraumplatte (36) sich nicht bewegt, wenn die Sitzlehne (33B) bewegt wird, um auf das Sitzpolster (33C) geklappt zu werden.

5. Heckkofferraumaufbau eines Fahrzeugs nach einem der vorhergehenden Ansprüche, wobei der Steuermechanismus (55) derart aufgebaut ist, dass die Nichtverbindung der Bewegungen der Kofferraumplatte (36) und der Sitzlehne (33B) ausgewählt wird, wenn die Sitzlehne (33B) in einen Verwendungszustand betätigt wird, nachdem die Sitzlehne (33B) auf das Sitzpolster (33C) gefaltet worden war.

6. Heckkofferraumaufbau eines Fahrzeugs nach einem der vorhergehenden Ansprüche, wobei der Verbindungsmechanismus (54) einen Bedienungsabschnitt (58) umfasst, der bereitgestellt ist, so dass er wenigstens von einer Seite der Kofferraumplatte (36) bedienfähig ist, um eine Verbindung der Bewegungen der Sitzlehne (33B) und der Kofferraumplatte (36) oder deren Nichtverbindung auszuwählen.

7. Heckkofferraumaufbau eines Fahrzeugs nach einem der vorhergehenden Ansprüche, wobei der Verbindungsmechanismus (54) einen Steuermechanismus (55) umfasst, der eine Verbindung der Bewegung der Kofferraumplatte (36) in Bezug auf die Bewegung der Sitzlehne (33B) begrenzt, wobei eine Verbindung der Bewegung der Sitzlehne (33B) in Bezug auf die Bewegung der Kofferraumplatte (36) zugelassen wird.

8. Heckkofferraumaufbau eines Fahrzeugs nach Anspruch 1, wobei der Verbindungsmechanismus (54) einen Steuermechanismus (55) umfasst, der eine Verbindung der Bewegung der Kofferraumplatte (36) in Bezug auf die Bewegung der Sitzlehne (33B) begrenzt, wenn die Sitzlehne (33B) in eine Verwendungsposition bewegt wird, nachdem die Sitzlehne (33B) auf das Sitzpolster (33C) gefaltet worden war, wobei eine Verbindung der Bewegung der Kofferraumplatte (36) in Bezug auf die Bewegung der Sitzlehne (33B) in Richtung eines geklappten Zustands zugelassen wird.

9. Heckkofferraumaufbau eines Fahrzeugs nach Anspruch 1, wobei der Verbindungsmechanismus (54) einen Steuermechanismus (55) umfasst, der eine Verbindung der Bewegung der Kofferraumplatte (36) in Bezug auf die Bewegung der Sitzlehne (33B) begrenzt, wenn die Sitzlehne (33B) in Richtung eines geklappten Zustands bewegt wird und wenn die Sitzlehne (33B) in eine Verwendungsposition bewegt wird, nachdem die Sitzlehne (33B) auf das Sitzpolster (33C) gefaltet worden war.

10. Heckkofferraumaufbau eines Fahrzeugs nach einem der Ansprüche 7 bis 9, wobei der Steuermechanismus (55) einen Bedienabschnitt (51; 58) umfasst, um einen Verbindungszustand oder einen Verbindungsbegrenzungszustand auszuwählen, die durch eine Bedienung eines Fahrgasts ausgewählt werden.

## Revendications

1. Structure de compartiment de bagages arrière d'un véhicule, comprenant :
au moins un siège (33) situé sur un panneau de plancher (3b) d'une carrosserie de véhicule, le siège (33) comprenant une assise de siège (33C) et un dossier de siège (33B), le siège (33) étant configuré pour être pliant de telle sorte que le dossier de siège (33B) est replié vers ou sur l'assise de siège (33C) ;
un compartiment de bagages (5) formé à l'arrière du siège (33) ;
un panneau de compartiment de bagages (36) situé dans le compartiment de bagages (5), le panneau (36) étant supporté de façon à se déplacer au moins essentiellement verticalement ; et
un mécanisme de transmission (54) destiné à relier une manoeuvre du dossier de siège (33B) du siège devant être plié essentiellement sur l'assise de siège (33C) et un mouvement du panneau de compartiment de bagages (36),
**caractérisé en ce que** ledit mécanisme de transmission (54) comprend un mécanisme de commande (55) destiné à sélectionner une transmission de mouvements du dossier de siège (33B) et du panneau de compartiment de bagages (36) ou une non-transmission de ceux-ci, et dans lequel ledit mécanisme de commande (55) est commandé par une action d'un passager.

2. Structure de compartiment de bagages arrière d'un véhicule selon la revendication 1, dans laquelle le mécanisme de transmission (54) comprend en outre un engrenage (G1) ou poulie (P1), dans laquelle ledit engrenage (G1) ou poulie (P1) est introduit sans serrage vers un axe de rotation (41) du dossier de siège (33B).

3. Structure de compartiment de bagages arrière d'un véhicule selon les revendications 1 ou 2, dans laquelle une face arrière du dossier de siège (33B) dans un état replié et une face supérieure du panneau de compartiment de bagages (36) qui s'est déplacé vers le haut forment une face de compartiment de bagages sensiblement continue.

4. Structure de compartiment de bagages arrière d'un véhicule selon l'une quelconque des revendications précédentes, dans laquelle ledit mécanisme de commande (55) est configuré de telle sorte que le panneau de compartiment de bagages (36) ne se déplace pas lorsque le dossier de siège (33B) est déplacé pour se replier sur l'assise de siège (33C).

5. Structure de compartiment de bagages arrière d'un véhicule selon l'une quelconque des revendications précédentes, dans laquelle ledit mécanisme de commande (55) est configuré de telle sorte que lorsque le dossier de siège (33B) est actionné dans un état d'utilisation de celui-ci, après que le dossier de siège (33B) a été replié sur l'assise de siège (33C), la non-transmission des mouvements du panneau de compartiment de bagages (36) et du dossier de siège (33B) est sélectionnée.

6. Structure de compartiment de bagages arrière d'un véhicule selon l'une quelconque des revendications précédentes, dans laquelle ledit mécanisme de transmission (54) comprend une partie fonctionnelle (58) qui est fournie de manière à être efficace au moins depuis un côté du panneau de compartiment de bagages (36) pour sélectionner une transmission de mouvements du dossier de siège (33B) et du panneau de compartiment de bagages (36) ou une non-transmission de ceux-ci.

7. Structure de compartiment de bagages arrière d'un véhicule selon l'une quelconque des revendications précédentes, dans laquelle ledit mécanisme de transmission (54) comprend un mécanisme de commande (55) qui limite une transmission de mouvement du panneau de compartiment de bagages (36) par rapport au mouvement du dossier de siège (33B), permettant une transmission de mouvement du dossier de siège (33B) par rapport au mouvement du panneau de compartiment de bagages (36).

8. Structure de compartiment de bagages arrière d'un véhicule selon la revendication 1, dans laquelle ledit mécanisme de transmission (54) comprend un mécanisme de commande (55) qui limite une transmission de mouvement du panneau de compartiment de bagages (36) par rapport au mouvement du dossier de siège (33B) lorsque le dossier de siège (33B) est actionné dans un état d'utilisation de celui-ci, après que le dossier de siège (33B) a été replié sur l'assise de siège (33C) permettant une transmission de mouvement du panneau de compartiment de bagages (36) par rapport au mouvement du dossier de siège (33B) dans un état replié.

9. Structure de compartiment de bagages arrière d'un véhicule selon la revendication 1, dans laquelle ledit mécanisme de transmission (54) comprend un mécanisme de commande (55) qui limite une transmission de mouvement du panneau de compartiment de bagages (36) par rapport au mouvement du dossier de siège (33B), lorsque le dossier de siège (33B) est déplacé dans un état replié et lorsque le dossier de siège (33B) est actionné dans un état d'utilisation de celui-ci après que le dossier de siège (33B) a été replié sur l'assise de siège (33C).

10. Structure de compartiment de bagages arrière d'un véhicule selon l'une quelconque des revendications 7 à 9, dans laquelle ledit mécanisme de commande (55) comprend une partie fonctionnelle (51 ; 58) pour sélectionner un état de transmission ou un état de limitation de transmission, qui est sélectionné par une action d'un passager.
